Europäisches Patentamt

European Patent Office

Office européen des brevets

(19)

(11) Publication number: **0 145 436**
**B1**

(12) EUROPEAN PATENT SPECIFICATION

(45) Date of publication of patent specification: 20.07.88

(51) Int. Cl.⁴: **F 16 K 17/08**

(21) Application number: **84308390.8**

(22) Date of filing: **04.12.84**

(54) **Pressure relief valves.**

(30) Priority: **09.12.83 GB 8332978**

(43) Date of publication of application:
**19.06.85 Bulletin 85/25**

(45) Publication of the grant of the patent:
**20.07.88 Bulletin 88/29**

(84) Designated Contracting States:
**DE FR IT**

(56) References cited:
**FR-A-1 498 933**
**FR-A-1 582 151**
**FR-A-2 341 087**
**GB-A- 406 720**
**GB-A-1 306 812**
**US-A-2 594 626**

**RESEARCH DISCLOSURE, no. 218, June 1982,
page 209, disclosure 21820, Havant,
Hampshire, GB; "Overpressure valve for oil-
minimum circuit breakers pressurized with
gas"**

(73) Proprietor: **LUCAS INDUSTRIES public limited
company**
**Great King Street**
**Birmingham, B19 2XF West Midlands (GB)**

(72) Inventor: **Goudie, Robert John**
**6 Snowshill Drive Cheswick Green**
**Solihull West Midlands B90 4JT (GB)**

(74) Representative: **Spall, Christopher John et al**
**BARKER, BRETTELL & DUNCAN 138 Hagley
Road**
**Edgbaston Birmingham B16 9PW (GB)**

Courier Press, Leamington Spa, England.

## Description

This invention relates to pressure relief valves.

Pressure relief valves are widely used in fluid pressure systems, particularly hydraulic systems, to limit the pressure which can build up in the system. One well-known type of pressure relief valve is the poppet type, in which a spring-loaded poppet valve member controls flow between a pressure inlet and a relief outlet. The valve member is biassed to close the inlet, and the spring force is opposed by the pressure at the inlet acting on the valve member. When the inlet pressure reaches a predetermined level it overcomes the spring force, and the valve cracks open to allow fluid to flow to the outlet. The fluid flow forces act on the valve member to open the valve further to allow full flow through the valve. The pressure differential across the valve increases to achieve this, and the difference between the inlet pressure at which the valve cracks open — the crack pressure — and that at which full flow is achieved — the full flow pressure — is known as the operating differential. The operating differential is undesirable since the increase in inlet pressure results in a greater temperature rise in the system, and more arduous conditions for the seals, and in some systems the operating differential may be substantial, up to 40 bar. Furthermore, the fluid flow forces acting on the valve member mean that the inlet pressure at which the valve member reseats — the reseat pressure — is substantially lower than that at which it cracks open. All this results in a substantial variation in the maximum pressure in the system which is undesirable. A further problem with this type of valve is that its maximum opening may only be of the order of 0.025mn, so that it is sensitive to dirt.

GB-A-406 720 shows a pressure relief valve comprising a housing provided with a pressure inlet, a relief outlet and a chamber whose communication with the inlet is controlled by a valve member which has a seating portion for closing the inlet and an area responsive to pressure, and is biassed by resilient means to close the inlet. The chamber communicates with the outlet by two connections, the first including a restriction in the valve member and the second allowing greater fluid flow, and being controlled by movement of the valve member, so that it is closed when the inlet is closed, and on initial opening of the valve. Initial opening of the valve allows pressure to build up in the chamber behind the restriction, to act on the valve member over the pressure-responsive area, which moves the valve member against the resilient means to open the valve fully and the second connection. Fluid flows from the inlet to the outlet until the inlet pressure drops sufficiently to enable the resilient means to return the valve member to its closed position.

The pressure in the chamber acting on the valve member moves the valve into its fully open position very rapidly after it has cracked open, so that the operating differential is removed. Further, this method of opening the valve means that the maximum opening of the valve can be greater, so that it is not sensitive to dirt. However, as the fluid flow forces acting on the valve member are considerable, the reseat pressure will be substantially less than the crack pressure, and so there will still be noticeable variation in the maximum pressure in the system.

According to the present invention, in a pressure relief valve of the type shown in GB-A-406 720 and defined in the pre-characterising part of Claim 1, the sizes of the inlet and the two connections are such that fluid flow into the chamber through the inlet is greater than fluid flow out of the chamber through the first connection only, but less than fluid flow out of the chamber through both connections, whereby the opening of the second connection relieves the pressure in the chamber, the resilient means then acting to return the valve member to close the second connection but not the inlet, allowing pressure to build up in the chamber so that the valve member moves to open the valve fully and the second connection again.

The oscillating motion of the valve member continues until the inlet pressure drops just below the crack pressure, which allows the valve member to reseat on the inlet at the end of its return movement. The valve member is able to reseat at this pressure because of the low pressure in the chamber, and the low fluid flow forces on the valve member. Thus, in the present invention there will be a further reduction in the variation of the maximum pressure in the system.

It will be noted that the pressure passes to the outlet in pulses, and not continuously, as is more usual with pressure relief valves. The valve member moves rapidly in response to the pressure in the chamber, to open the connection, and more slowly on its return, in response to the resilient means. The rapid movement creates pressure waves in the fluid, which provide an audible warning that the valve is operative. This is especially marked in hydraulic systems, where a water hammer effect is produced.

The first connection is preferably provided by passage means in the valve member arranged to provide a suitable pressure build-up in the chamber. The second connection may be provided by a passage in the housing leading from the chamber to the relief outlet.

The valve member is preferably a spool member which slides in a bore in the housing. The seating portion is preferably conical.

Pressure relief valves in accordance with our invention may be used in vehicle hydraulic systems, in which a fixed displacement engine-driven pump is used to supply an accumulator for a braking system, and an hydraulic suspension system. The oscillation of the valve member means that valve will reseat without the pump being turned off, so the valve is particularly useful in such vehicle hydraulic systems.

Some embodiments of our invention are illustrated in the accompanying drawings, in which:

Figure 1 is a longitudinal section through a pressure relief valve; and

Figure 2 is a scheme of a vehicle hydraulic system incorporating the valve in Figure 1.

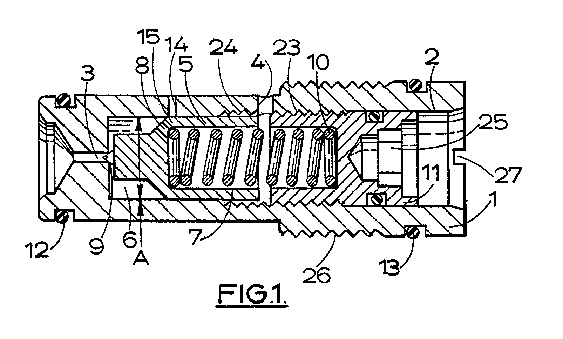

The pressure relief valve shown in Figure 1 is adapted for incorporation in a fluid pressure system. The valve comprises a housing 1 provided with a stepped longitudinal bore 2. At one end of the bore 2 a pressure inlet 3 is defined, while a radial passage 4 leading from the bore 2 comnunicates with a relief outlet. A spool valve member 5 works in the bore 2, and controls fluid flow between the inlet 3 and the outlet passage 4, fluid flow being through a chamber 6 defined in the bore 2 adjacent the inlet 3. The chamber 6 is in permanent communication with the outlet passage 4 through a first connection comprising a bore 7 and an inclined passage 8 in the spool 5, and the bore 2. A second connection between the chamber 6 and the relief outlet is provided by a second radial passage 14 leading from the bore 2. Communication through this connection is controlled by a land 15 on the spool 5. A conical seating portion 9 on the spool 5 adapted to close the inlet 3 controls fluid flow between the inlet 3 and the chamber 6. The valve spool 5 has an area A responsive to pressure in the chamber 6, and is biassed to close the inlet 3 by a spring 10, which works between the end of the bore 7 in the spool 5, and a stationary plug 11 which is sealingly received in the end of the bore 2 remote from the pressure inlet 3. The plug 11 has an external screw-thread 23 which cooperates with an internal screwthread 24 in the bore 2, and is provided with a socket 25 to enable it to be screwed into the bore.

In operation the pressure relief valve is incorporated in a fluid pressure system (not shown in Figure 1). The valve is preferably screwed onto a suitable part by an external screw thread 26. The annular end of the housing 1 at the open end of the bore 2 has a pair of slots 27 for a screwdriver, enabling the valve to be installed easily. When incorporated in a system the pressure inlet 3 is connected to the source of pressure for the system, and the outlet passage 4 is connected to a reservoir for the fluid. Seals 12, 13 are provided on the housing 1 to seal the connections into the system.

When incorporated in the system, pressure at the inlet 3 acts on the conical seating portion 9 to produce a force on the valve member 5, which is opposed by the force in the spring 10. If there is a fault in the system which causes the pressure to rise, at a predetermined level of inlet pressure, known as the crack pressure, the force in the spring 10 is overcome, and the valve cracks open. This allows fluid to flow into the chamber 6, and then out to the outlet passage 4 through the passage 8 and bore 7 in the spool 5, and the bore 2, although the second connection remains closed. The relative sizes of the inlet 3 and passage 8 are chosen so that pressure builds up in the chamber 6. This pressure acts on the relatively large area A of the valve spool 5, and moves the valve spool 5 rapidly towards the plug 11 to open the inlet 3 fully. This causes the land 15 to uncover the passage 14, so that the pressure in the chamber 6 flows to the relief outlet. The reduction in pressure in the chamber 6 enables the spring 10 to return the valve spool 5 so that the land 15 eloses the passage 14, but the seating portion 9 does not close the inlet 3. Pressure can then build up again in chamber 6 to open the valve fully again, and to open the passage 14, so that the cycle repeats.

When the inlet pressure drops to just below the crack pressure the valve will reseat on the inlet 3 at the end of its next return movement. The valve is able to reseat at this pressure because of the low pressure in the chamber 6, and the low fluid flow forces on the valve spool 5. This has the advantage that the valve can reseat automatically when the fault in the system is rectified, and does not require the pressure source to be made inoperative before it reseats.

In this valve pressure fluid passes to the relief outlet in pulses, and not continuously. The valve spool 5 moves rapidly in response to the pressure in the chamber 6, but more slowly on its return movement in response to the spring 10. The rapid movement creates pressure waves, which provide an audible warning that the valve is operative. This is especially marked where the system is hydraulic, and the valve tends to create a water hamner effect. The frequency of the oscillation of the valve spool 5 will typically be between 1 and 10Hz.

This pressure relief valve also overcomes other disadvantages of the conventional poppet type valve. For example, a poppet valve in general has a large operating differential, that is, it requires a large increase in inlet pressure after cracking open before it reaches full flow. This operating differential results in a greater rise in temperature of the system, in more arduous conditions for the seals, and in variation of the maximum pressure in the system. However, in the present valve the operating differential is substantially removed, as the pressure in the chamber ensures that the valve opens fully soon after cracking open. Furthermore, the valve has a maximum opening of approximately lmm, so that it is not sensitive to dirt, whereas the conventional poppet type is, as its maximum opening is typically 0.025 mm.

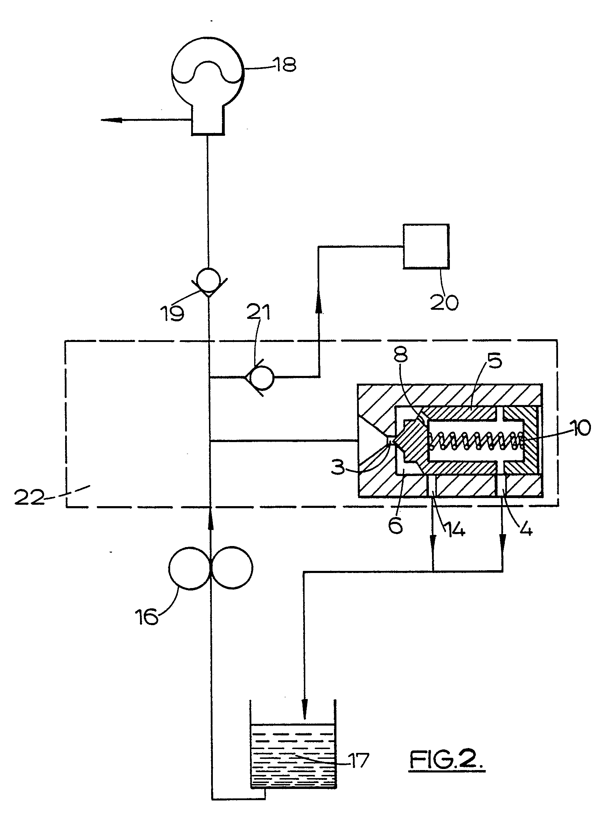

Figure 2 shows a vehicle hydraulic system incorporating the valve of Figure 1. The system comprises a fixed displacement engine-driven pump 16 which draws fluid from a reservoir 17, and pumps it to an accumulator 18 through a one-way valve 19 and to a suspension system 20 through a one-way valve 21. The accumulator 18 may operate the braking system (not shown) and other equipment. The pressure relief valve is incorporated in a control valve assembly 22, with the inlet 3 connected at a point between the pump 16 and the one-way valves 19, 21. The passages 4, 14 are connected to the reservoir 17. It is important for the valve inlet to be connected between the pump 16 and the one-way valves, as this ensures that it operates efficiently to relieve the pressure from the pump 16, and not that stored in the accumulator 18 or the suspension system 20.

The automatic reseating of the valve of Figure 1 is particularly advantageous in the system of Figure 2, as the engine does not have to be switched off in order to reseat the valve.

**Claims**

1. A fluid pressure relief valve comprising a housing (1) provided with a pressure inlet (3) and a relief outlet (4), a chamber (6) in communication with the relief outlet, a valve member (5) movable to control fluid flow between the inlet (3) and the chamber (6), the valve member (5) having a seating portion (9) adapted to close the inlet (3) and an area responsive to pressure in the chamber (6), and resilient means (10) biassing the valve member (5) to close the inlet (3) against the pressure applied to the inlet, and two fluid connections (8, 7; 14) between the chamber (6) and the outlet (4), the first connection including a restriction (8) provided in the valve member (5) and the second connection (14) allowing greater flow and being controlled by movement of the valve member (5), such that the second connection (14) is closed by the valve member (5) when the inlet (3) is closed and on initial opening of the valve, and on initial opening of the valve the pressure builds up in the chamber (6) behind the restriction (8) and acts on the valve member (5) over the pressure-responsive area to produce a force in opposition to the force in the resilient means (10), and moves the valve member (5) to open the valve fully, thus opening the second connection (14), characterised in that the sizes of the inlet (3) and two connections (8, 7; 14) are such that fluid flow into the chamber (6) through the inlet (3) is greater than fluid flow out of the chamber (6) through the first connection (8, 7) only, but less than fluid flow out of the chamber (6) through both connections (8, 7; 14), whereby opening of the second connection (14) relieves the pressure in the chamber (6), the resilient means (10) then acting to return the valve member (5) to close the second connection (14) but not the inlet (3), allowing pressure to build up in the chamber (6) so that the valve member moves to open the valve fully and the second connection (14) again.

2. A fluid pressure relief valve according to claim 1, characterised in that the first connection is provided by passage means (8, 7) in the valve member (5).

3. A fluid pressure relief valve as claimed in claim 1 or claim 2, in which the second connection is provided by a passage (14) in the housing (1) leading from the chamber (6) to the relief outlet (4).

4. A fluid pressure relief valve according to any preceding claim, characterised in that the valve member comprises a spool (5) sliding in a bore (2) in the housing (1).

5. A fluid pressure relief valve according to any preceding claim, characterised in that the valve member (5) has a conical seating portion (9).

6. A vehicle hydraulic system comprising a fixed displacement engine-driven pump for supplying an accumulator for a vehicle braking system and an hydraulic suspension system, and incorporating a fluid pressure relief valve according to any preceding claim.

**Patentansprüche**

1. Überdruckventil mit einem Gehäuse (1), welches mit einem Druckeinlaß (3) und einem Entlastungsauslaß (4) versehen ist, sowie einer Kammer (6), die mit dem Entlastungsauslaß verbunden ist, einem Ventilkörper (5), welcher zur Steuerung der Fluidströmung zwischen dem Einlaß (3) und der Kammer (6) bewegbar ist, wobei der Ventilkörper (5) einen Sitzbereich (9) aufweist, mittels dessen der Einlaß (3) verschließbar ist, sowie einen Bereich, welcher durch den Druck in der Kammer (6) beaufschlagbar ist, und mit einer elastischen Einrichtung (10) zum Vorspannen des Ventilkörpers (5) zum Verschließen des Einlasses (3) gegen den Druck, der auf den Einlaß aufgebracht wird, und zwei Fluidverbindungen (8, 7; 14) zwischen der Kammer (6) und dem Auslaß (4), wobei die erste Verbindung eine Drosselstelle (8) umfaßt, die in dem Ventilkörper (5) vorgesehen ist und wobei die zweite Verbindung (14) eine größere Strömung ermöglicht und durch die Bewegung des Ventilkörpers (5) gesteuert ist, so daß die zweite Verbindung (14) von dem Ventilkörper (5) geschlossen wird, wenn der Einlaß (3) geschlossen ist und bei anfänglicher Öffnung des Ventiles, und daß bei anfänglicher Öffnung des Ventiles der Druck in der Kammer (6) hinter der Drosselstelle (8) ansteigt und über den druckbeaufschlagbaren Bereich auf den Ventilkörper (5) drückt, um eine Kraft entgegenge setzt zu der Kraft in der elastischen Einrichtung (10) zu erzeugen und den Ventilkörper (5) zur vollständigen Öffnung des Ventiles bewegt, wodurch die zweite Verbindung (14) geöffnet wird, dadurch gekennzeichnet, daß die Abmessungen des Einlasses (3) und der beiden Verbindungen (8, 7; 14) so ausgewählt sind, daß eine Fluidströmung in die Kammer (6) über den Einlaß (3) größer ist als eine Fluidausströmung aus der Kammer (6) ausschließlich durch die erste Verbindung (8, 7), jedoch geringer als eine Fluidausströmung aus der Kammer (6) durch beide Verbindungen (8, 7; 14), wobei eine Öffnung der zweiten Verbindung (14) den Druck in der Kammer (6) abbaut, wodurch die elastische Einrichtung (10) eine Rückbewegung des Ventilkörpers (5) bewirkt, um die zweite Verbindung (14), nicht jedoch den Einlaß (3), zu schließen, wodurch der Druck in der Kammer (6) ansteigen kann, so daß der Ventilkörper wiederum zur vollständigen Öffnung des Ventiles und der zweiten Verbindung (14) bewegt wird.

2. Überdruckventil nach Anspruch 1, dadurch gekennzeichnet, daß die erste Verbindung in Form eines Durchlasses (8, 7) in dem Ventilkörper (5) ausgebildet ist.

3. Überdruckventil nach Anspruch 1 oder 2, bei welchem die zweite Verbindung in Form eines Durchlasses (14) in dem Gehäuse (1) ausgebildet ist, welcher von der Kammer (6) zu dem Entlastungsauslaß (4) führt.

4. Überdruckventil nach einem der vorhergehenden Ansprüche, dadurch gekennzeichnet, daß der Ventilkörper in Form eines in einer Bohrung (2) in dem Gehäuse (1) verschiebbaren Spulenkörpers ausgebildet ist.

5. Überdruckventil nach einem der vorhergehenden Ansprüche, dadurch gekennzeichnet, daß der Ventilkörper (5) einen konischen Sitzbereich (9) umfaßt.

6. Hydrauliksystem für ein Kraftfahrzeug mit einer stationären, durch einen Motor angetriebenen Förderpumpe zur Versorgung eines Speichers für ein Kraftfahrzeug-Bremssystem und ein hydraulisches Aufhängungssystem, welches ein Überdruckventil nach einem der vorhergehenden Ansprüche umfaßt.

**Revendications**

1 Soupape de décharge de pression de fluide comprenant un corps (1) muni d'une entrée de pression (3) et d'une sortie de décharge (4), une chambre (6) qui est en communication avec la sortie de décharge, un élément mobile de soupape (5) qui peut se déplacer pour commander l'écoulement du fluide entre l'entrée (3) et la chambre (6), l'élément mobile (5) possédant une partie de portée (9) adaptée pour fermer l'entrée (3) et une surface sensible à la pression intérieure de la chanbre (6) et des moyens élastiques (10) qui sollicitent l'élément mobile (5) pour fermer l'entrée (3) à l'encontre de la pression appliquée à l'entrée, et deux voies d'écoulement du fluide (8, 7; 14) entre la chambre (6) et la sortie (4), la première voie comprenant un étranglement (8) prévu dans l'élément mobile (5) de la soupape, et la deuxième voie (14) laissant passer un plus grand débit et étant commandée par le mouvement de l'élément mobile (5), de telle manière que la deuxième voie (14) soit fermée par l'élément mobile (5) lorsque l'entrée (3) est fermée et pendant le mouvement initial de l'ouverture de la soupape, et de telle manière que, pendant le mouvement initial de l'ouverture de la soupape, la pression s'élève dans la chambre (6) en amont de l'étranglement (8) et agisse sur l'élément mobile (5), sur la surface sensible à la pression, pour produire une force antagoniste à la force régnant dans les moyens élastiques (10), et déplace l'élément mobile (5) de façon à ouvrir entièrement la soupape, pour ouvrir ainsi la deuxième voie (14), caractérisée en ce que les dimensions de l'entrée (3) et des deux voies (8, 7; 14) sont telles que le débit d'écoulement pénétrant dans la chambre (6) en passant par l'entrée (3) soit supérieur au débit du fluide qui sort de la chambre (6) par la seule première voie (8, 7) mais inférieur au débit de fluide qui sort de la chambre (6) par les deux voies (8, 7; 14), de sorte que l'ouverture de la deuxième voie (14) relâche la pression intérieure de la chambre (6), les moyens élastiques (10) entrant alors en action pour renvoyer l'élément mobile (5) de la soupape pour fermer la deuxième voie (14) mais non pas l'entrée (3), en permettant ainsi à la pression de s'élever dans la chambre (6) de façon que l'élément mobile de la soupape entre en mouvement pour ouvrir à nouveau entièrement la soupape et la deuxième voie (14).

2. Soupape de décharge de pression de fluide selon la revendication 1, caractérisée en ce que la première voie est formée par des moyens de passage (8, 7) ménagés dans l'élément mobile (5) de la soupape.

3. Soupape de décharge de pression de fluide selon la revendication 1 ou la revendication 2, dans laquelle la deuxième voie est formée par un passage (14) ménagé dans le corps (1) et qui mène de la chambre (6) à la sortie de décharge (4).

4. Soupape de décharge de pression de fluide selon une quelconque des revendications précédentes, caractérisée en ce que l'élément mobile de la soupape est constitué par un tiroir (5) qui coulisse dans un alésage (2) du corps (1).

5. Soupape de décharge de pression de fluide selon une quelconque des revendications précédentes, caractérisée en ce que l'élément mobile (5) de la soupape possède une partie de portée conique (9).

6. Circuit hydraulique de véhicule comprenant une pompe à déplacement fixe entraînée par le moteur, destinée à alimenter un accumulateur appartenant au circuit de freinage du véhicule et un circuit de suspension hydraulique, ce circuit hydraulique étant équipé d'une soupape de décharge de pression de fluide selon une quelconque des revendications précédentes.

**FIG.1.**

1

FIG.2.